# EUROPEAN PATENT APPLICATION

(11) **EP 2 107 753 A1**
(43) Date of publication of application: **07.10.2009**
(21) Application number: 08103316.9
(22) Date of filing: 02.04.2008
(51) Int. Cl.: H04L 29/06, G10L 19/00

(54) **Signal processing method and a signal processing network equipment for media enhancement**

(71) Applicant: Nokia Siemens Networks Oy, 02610 Espoo (FI)
(72) Inventor: Goldstein, Peter, 8800, Thalwil (CH)
(74) Representative: Kley, Hansjörg

(57) **Abstract**

According to the standards set out e.g. by the ITU-T media enhancement in a telecommunication network with a signal processing network equipment (SPNE) is carried out with «media specific signal processing functions» (SPF) each having its individual «basic signal processing function» (VAD, CNG, BND). Implementations following the standards do result in a platform providing these signal processing functions manifold (static complexity) and therefore increasing the processing load (dynamic performance). The invention solves this problem with only one representation of each «basic signal processing function» (VAD, CNG, BND) in addition to the «media specific signal processing functions» (SPF).

## Description

The present invention relates to a signal processing method and to a Signal Processing Network Equipment for media enhancement in a telecommunication network according to the preamble of claim 1 and claim 8 respectively.

**Background of the invention**

Signal processing functions are used in telecommunication networks (fixed, mobile and packet networks) to improve media, e.g. voice, quality and to save bandwidth. With respect to media enhancement, which can be described as e.g. eliminating echo and noise and adjusting the power level of the media signal. There are two classes of signal processing functions:

i) «Media signal processing functions» intended for media enhancement , e.g. voice enhancement, hereafter called «media signal processing functions for media enhancement» SPF or short «media specific signal processing functions» SPF.

ii) «Media signal processing functions» not related to media enhancement but related to media differentiation and bandwidth saving, hereafter called «basic signal processing functions».

For the sake of clarity the above mentioned terms are where appropriate marked with «guillemets».

The standards do describe the «basic signal processing functions» such as Voice Activity Detection VAD, Background Noise Detection BND and Comfort Noise Generation CNG as an integral part of «other signal processing functions»; see e.g. voice Codec as defined in ITU-T Recommendation G.711 and Echo Canceller as defined in ITU-T Recommendation G.168.

The «basic signal processing functions» and the «media signal processing functions for media enhancement» SPF are provided on a platform, often called Signal Processing Network Equipment SPNE. The disadvantage of the current situation is twofold:

i) Implementations following the standards do result in a platform providing these «basic signal processing functions» manifold (static complexity) and therefore increasing the processing load (dynamic performance).

ii) With the introduction of new services using other media than voice, signal processing must be updated to consider the actual media type.

Improved methods and signal processing network equipment SPNE are therefore desired for enhancing the media quality.

It is therefore a task of the present invention to provide a Signal processing method and a Signal Processing Network Equipment for media enhancement, which avoids the before mentioned drawbacks.

This task is solved by a method specified in claim 1 and by a Signal Processing Network Equipment SPNE given with the features in claim 8.

By providing the different «basic signal processing functions» only once and the introduction of a media bearer selector, selecting the media, based on a «control signal silence» received from the «basic signal processing function», either from a «media signal processing function for media enhancement» SPF or from a «basic signal processing function», the media enhancement process is optimized with respect to processing performance and functional complexity. A Signal Processing Network Equipment with the features given in claim 8 can be deployed e.g. in different locations in a mobile network or in a Media Gateway, either as a stand alone equipment or as an integral part of another network element.

Further advantageous embodiments of the present invention are given in dependent claims.

The invention is now described in preferred embodiments with reference to the accompanying figures wherein:

Figure 1
Signal processing network equipment in a mobile network;

Figure 2
Signal processing network equipment in a Media Gateway;

Figure 3
block diagram of an preferred embodiment for implementing the invention in the form of a signal processing network equipment;

Figure 4
diagram of a signal processing function control procedure.

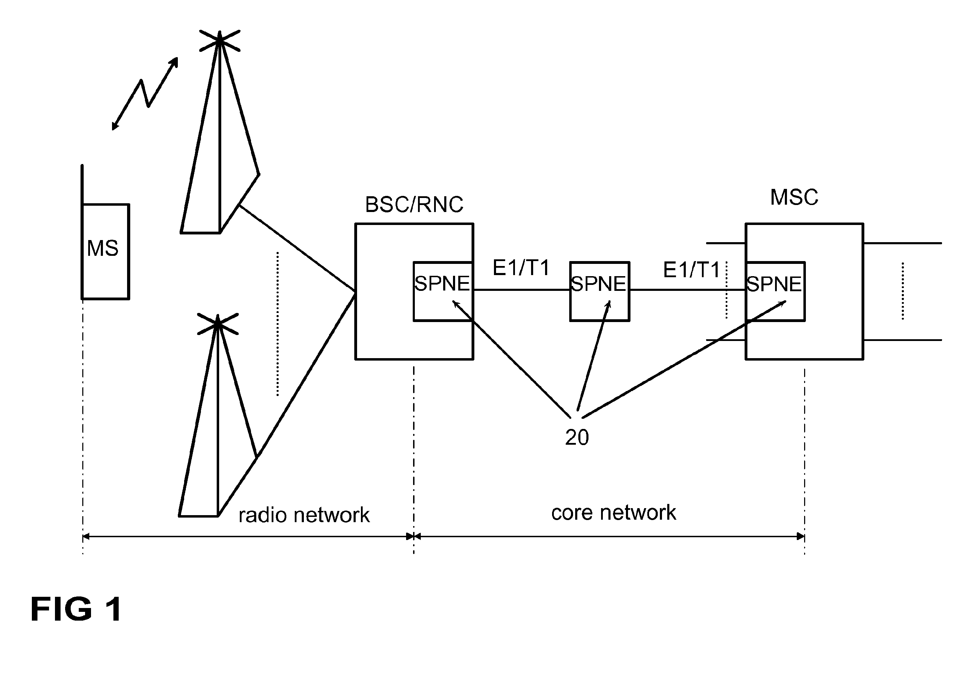

Figure 1 shows a typical mobile network including the radio network and the core network. The «media signal processing functions for media enhancement» SPF would typically be acoustic echo control and noise reduction. This combination is also called «voice enhancement device» VED. The reference numeral 20 denotes possible locations for the voice enhancement device VED as part of a signal processing networking equipment SPNE. This locations are either in
- the base station controller BSC/radio network control RNC;
- the mobile switching center MSC or
- the transmission path between BSC/RNC and MSC.

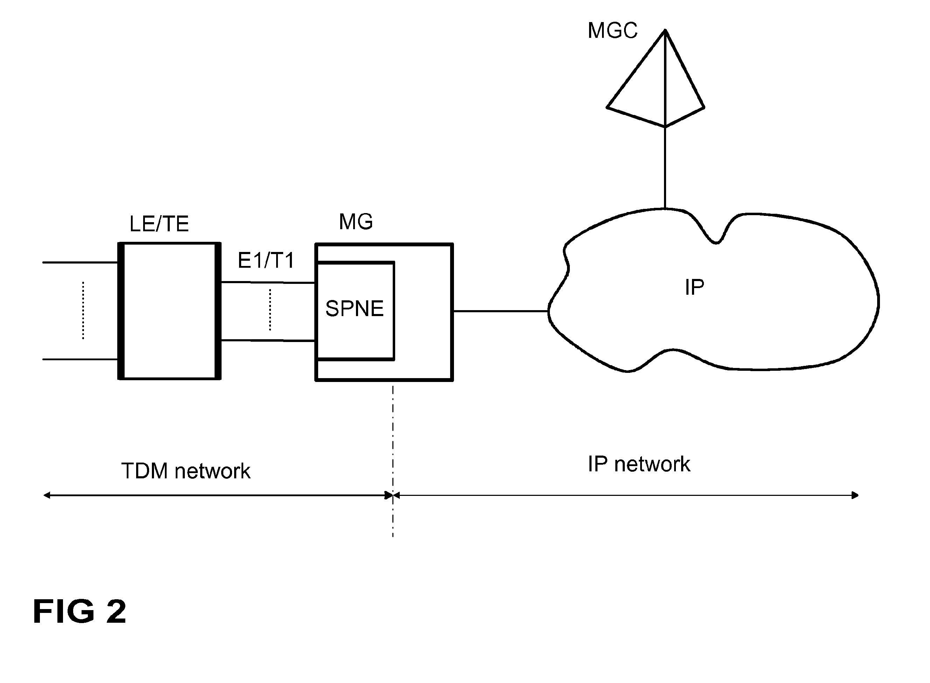

Figure 2 shows a decomposed gateway connecting a TDM network and a packet network, e.g. IP network. The media gateway MG typically provides besides at least one codec a number of media - preferably voice - signal processing functions for media enhancement SPF and «basic signal processing functions» such as echo cancellation, gain control and voice activity detection, comfort noise generation respectively.

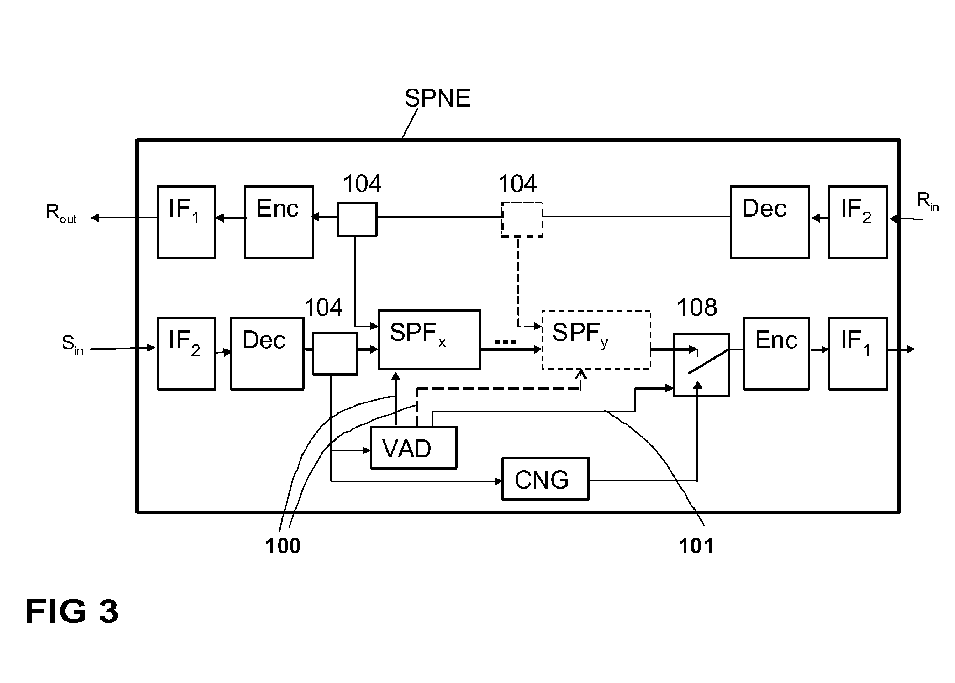

With reference to figure 3, an embodiment for implementing the invention includes an interfaces IF₁, IF₂ to the bearer carrying the media, encoder Enc and decoder Dec. The sending path Sᵢₙ / Sₒᵤₜ also includes a tap 104 feeding the media stream into the chain with one ore more media (voice) signal processing functional entities for voice enhancement SPF_{X}, SPF_{Y} and the chain with the basic signal processing functional entities VAD and CNG. A media bearer selector 108 controlled by the VAD feeds the media into the encoder ENC (sending path) which is connected to the interface IF₂ (sending path) to the bearer carrying the media. Depending on the result of the VAD, which is the control signal «silence» 101, the media bearer selector 108 connects to the chain with the voice processing functional entities (voice signal) or to the chain with the CNG (comfort noise signal). When using an intelligent VAD, being able to differentiate between different media types, e.g. voice vs. music, the voice signal processing functional entities for voice enhancement can be disabled with the control signal «voice» 100 if the present media type is music.

The receiving path Rᵢₙ / Rₒᵤₜ may contain one or more tap(s) 104 feeding the media stream into those voice signal processing functional entities for voice enhancement SPF_{X}, SPF_{Y} that do need the signal on the receiving path Rᵢₙ / Rout as a reference signal, e.g. the echo cancellation functional entity. Although the exemplary environment described herein employs the decoder Dec in order to provide the linear representation of the signals to the signal processing functional entities and the encoder Enc to restore the coded representation of the signals for the transmission it could be possible to omit the encoder Enc and the decoder Dec, if the algorithms used in the signal processing functional entities are such that they can process the coded representation of the signals. Although the exemplary description relates to the media type voice, which may also include voice band data, it is recognized that an expert skilled in this area may also apply the invention to a signal processing platform intended for other media types.

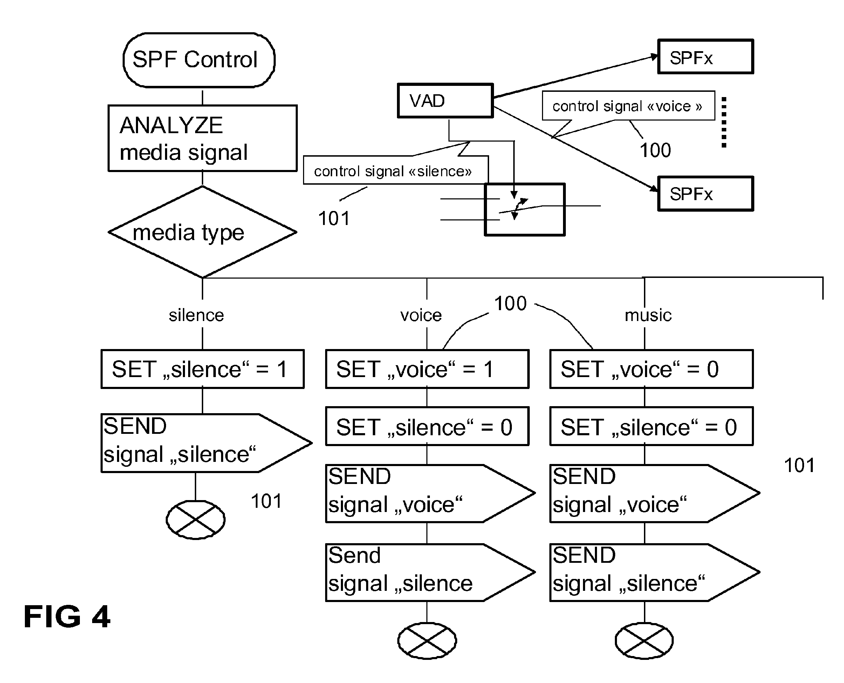

Figure 4 is a diagram illustrating the signal processing function control procedure that can be stored as instructions on a processor-readable medium together with the algorithm for the media type analysis and executed by a processor integrated in the VAD. In the case of only background noise present the information for the control signal «silence» is set, so that the media bearer selector 108 selects the media from the CNG. If the media type is voice, then the information for the control signal «silence» is reset, so that the media bearer selector 108 selects the media from the voice processing chain and the information for the control signal «voice» is set, so that the voice processing functional entities are enabled. If the media type is music, then the information for the control signal «silence» is reset, so that the media bearer selector 108 selects the media from the voice processing chain and the information for the control signal «voice» is also reset, so that the voice processing functional entities SPF_{X}, SPF_{Y} are disabled and the music signal traverses the voice processing functional entities SPF_{X}, SPF_{Y} untouched.

Finally the term «voice processing functional entities» SPF_{X}, SPF_{Y} is used in a synonym way as the term «media specific signal processing functions SPF» and does not restrict the scope claimed in this paper.

### List of reference numerals and used symbols, glossary

- 100: control signal voice
- 101: control signal silence
- 104: tap
- 108: media bearer selector
- BSC: Base Station Controller
- CNG: Comfort Noise Generation
- Dec: Decoder
- Enc: Encoder
- ECD: Echo Control Device, e.g. Echo Canceller
- ETSI: European Telecommuniction Standardization Institute
- IETF: Internet Engineering Task Force
- IF: Interface
- IP: Internet Protocol
- ITU-T: International Telecommunication Union
- LE: Local Exchange
- MG: Media Gateway
- MGC: Media Gateway Controller
- MS: Mobile Station
- MSC: Mobile Switching Center
- RNC: Radio Network Control
- SPNE: Signal Processing Networking Equipment
- TDM: Time Division Multiplex
- TE: Transit Exchange
- VAD: Voice Activity Detection
- VED: Voice Enhancement Device (acoustic echo control and noise reduction)

### References

[1] WO 2007/022818 A1
   «Method for the manipulation of speech packets in an IP-Gateway»
   Siemens Schweiz AG; CH - 8047 Zürich.
[2] WO 2004/006597 A1 / EP 1 586 209 B1
   «Avoidance of transcoding or interruption on live load coding exchange in extant connections»
   Siemens Aktiengesellschaft, DE - 80333 Munich
[3] ITU-T Rec. G.711/App.II
   Pulse code modulation (PCM) of voice frequencies;
[4] ITU-T Rec. G.168
   Digital network echo cancellers/App.I
[5] ITU-T Rec. G729/Annex B
   A silence compression scheme for G.729 optimized for terminals conforming to Recommendation V.70
[6] ITU-T Rec. G.722.2/Annex A
   Wideband coding of speech at around 16 kbit/s using Adaptive Multi-rate Wideband (AMR-WB), Comfort noise aspects

## Claims

1. Method for media enhancement in a telecommunication network with a signal processing network equipment (SPNE) which equipment comprises
«media specific signal processing functions» (SPF) each with its individual «basic signal processing function» (VAD, CNG, BND);
**characterized in that**
only one of each «basic signal processing function» (VAD, CNG, BND) is provided in addition to the «media specific signal processing functions» (SPF), where a tap (104) is provided which feeds the media to the «media specific signal processing functions» (SPF) and to the «basic signal processing function» (VAD, CNG, BND) and where a media bearer selector (108) selects the media, based on a «control signal silence» (101) received from the «basic signal processing function» (VAD), either from a «media specific signal processing function» (SPF) or from a «basic signal processing function» (CNG).

2. Method according to claim 1;
**characterized in that**
for media voice a «media specific signal processing function» (SPF) is either
an echo cancellation function,
an acoustic echo control function,
a noise reduction function or
an automatic level gain control function.

3. Method according to claim 1 or 2;
**characterized in that**
for media voice the «basic signal processing function» comprises
a Voice Activity Detection function (VAD),
a Comfort Noise Generation function (CNG) and
a Background Noise Detection function (BND).

4. Method according to claim 3;
**characterized in that**
the Voice Activity Detection function (VAD) provides a signal, indicating the presence of voice or the absence of voice, for the media bearer selector (108).

5. Method according to claim 3 or to 4;
**characterized in that**
in order to save processing power, the Voice Activity Detection function (VAD) disables the «media specific signal processing functions» (SPF) with a «control signal voice» (100) if no media is present.

6. Method according to one of the claims 3 to 5;
**characterized in that**
a call control/resource control entity in a network element controlling the Signal Processing Network Equipment (SPNE) may enable/disable the at least one «media specific signal processing function» (SPF) based on criteria, such as subscriber subscription for media enhancement or bilateral agreements between network operators concerning providing «media signal processing functions» (SPF).

7. Method according to claim 1;
**characterized in that**
for media music or video the «media specific signal processing functions» (SPF) are disabled by «basic signal processing function» (VAD) with a «control signal voice» (100).

8. Signal Processing Network Equipment (SPNE) for media enhancement in a telecommunication network with a signal processing network equipment (SPNE) which equipment comprises «media specific signal processing functions» (SPF) each with its individual «basic signal processing function» (VAD, CNG,
BND);
**characterized in that**
only one of each «basic signal processing function» (VAD, CNG, BND) is provided in addition to the «media specific signal processing functions» (SPF), where a tap (104) is provided which feeds the media to the «media specific signal processing functions» (SPF) and to the «basic signal processing function» (VAD, CNG, BND) and where a media bearer selector (108) selects the media, based on a «control signal silence» (101) received from the «basic signal processing function» (VAD), either from a «media specific signal processing function» (SPF) or from a «basic signal processing function» (CNG).

9. Network Equipment (SPNE) according to claim 8;
**characterized in that**
for media voice a «media specific signal processing function» (SPF) is either
an echo cancellation function,
an acoustic echo control function,
a noise reduction function or
an automatic level gain control function.

10. Network Equipment (SPNE) according to claim 8 or 9;
**characterized in that**
for media voice the «basic signal processing function» comprises
a Voice Activity Detection function (VAD),
a Comfort Noise Generation function (CNG) and
a Background Noise Detection function (BND).

11. Network Equipment (SPNE) according to claim 10;
**characterized in that**
the Voice Activity Detection function (VAD) provides a signal, indicating the presence of voice or the absence of voice, for the media bearer selector (108).

12. Network Equipment (SPNE) according to claim 10 or to 11;
**characterized in that**
in order to save processing power, the Voice Activity Detection function (VAD) disables the «media specific signal processing functions» (SPF) with a «control signal voice» (100) if no media is present.

13. Network Equipment (SPNE) according to one of the claims 10 to 12;
**characterized in that**
a call control/resource control entity in a network element controlling the Signal Processing Network Equipment (SPNE) may enable/disable the at least one «media specific signal processing function» (SPF) based on criteria, such as subscriber subscription for media enhancement or bilateral agreements between network operators concerning providing «media specific signal processing functions» (SPF).

14. Network Equipment (SPNE) according to claim 8;
**characterized in that**
for media music or video the «media specific signal processing functions» (SPF) are disabled by «basic signal processing function» (VAD) with a «control signal voice» (100).
